# EUROPEAN PATENT APPLICATION

(11) **EP 3 929 613 A1**
(43) Date of publication of application: **29.12.2021**
(21) Application number: 20185543.4
(22) Date of filing: 13.07.2020
(51) Int. Cl.: G01S 5/16, G05D 1/02

(54) **A METHOD FOR NAVIGATING A MOVABLE DEVICE ALONG AN INCLINED SURFACE**

(30) Priority: 22.06.2020 US 202063042176 P
(71) Applicant: Carnegie Robotics, LLC, Pittsburgh, Pennsylvania 15201 (US)
(72) Inventor: Robinson, David Ian, Pittsburgh, Pennsylvania 15201 (US); LaRose, David, Pittsburgh, Pennsylvania 15201 (US); Tancraitor, Troy Edward, Pittsburgh, Pennsylvania 15201 (US)
(74) Representative: Inspicos P/S

(57) **Abstract**

A method for navigating a movable device is disclosed. The movable device comprises a moving system arranged to move the movable device along a surface, a control system arranged to control movement of the movable device by means of the moving system, and a vision-based detector. At least one fiducial mounted at or near a position of the movable device, is captured by means of the vision-based detector and recognised. A position and/or a pose of the movable device is determined, based on the recognised at least one fiducial. An inclination of the movable device is detected, and the determined position and/or pose of the movable device is corrected, based on the detected inclination of the movable device. Finally, the movable device is navigated based on the corrected position and/or pose of the movable device.

## Description

### FIELD OF THE INVENTION

The present invention relates to a method for navigating a movable device, such as a robotic vehicle, moving along a surface. The method according to the invention is particularly suitable for allowing the movable device to move along an inclined or sloped surface. The invention further relates to a movable device being navigated in accordance with such a method.

### BACKGROUND OF THE INVENTION

Self-moving devices, such as robotic vehicles, need to be able to navigate in order to safely perform required tasks in a safe and reliable manner. To this end, such movable devices may be provided with various sensors allowing the movable device to recognise the surrounding environment, determine its position, e.g. relative to a map, identify obstacles, etc. For instance, the movable device may be provided with one or more lidars. In this case, the lidar(s) emit signals which are reflected from various surfaces, thereby allowing the movable device to continuously determining the distance to objects, walls, etc., and possibly mapping a site where the movable device is supposed to operate. While lidars provide a precise tool for determining the position of a movable device, they may be too expensive for low cost applications. Furthermore, when the movable device moves along an inclined or sloped surface, the lidar detections become unreliable. Finally, lidars normally include moving parts which may decrease ruggedness.

Alternatively or additionally, movable devices may be provided with vision-based detectors, such as cameras, allowing the movable device to 'see' the surroundings, and possibly estimate the distance to objects, walls, etc.

US 7,177,737 B2 discloses a method and an apparatus that use a visual sensor and dead reckoning sensors to process Simultaneous Localization and Mapping (SLAM) in mobile devices, such as mobile robots. The mobile device recognises physical landmarks by means of the visual sensor, and may use this for providing a global indication of position and to correct for drift in the dead reckoning sensors.

EP 0 363 339 A2 discloses an apparatus and a method for the determination of a vehicle's orientation and position in an environment, such as a hallway, from an image of ceiling lights. A camera is pitched up obliquely at an intermediate angle between a horizon and zenith. The camera views a ceiling having one or more ceiling lights which may be of rectangular shape, and which may be aligned with an axis of the hallway.

US 8,588,512 B2 discloses a localization method of a moving robot. A first omni-directional image is captured by the moving robot. At least one node is confirmed, at which a second omni-directional image having a high correlation with the first omni-directional image is captured. Based thereon it can be determined if the moving robot is located at the first node.

None of the prior art methods described above are capable of precisely locating a movable device when the movable device is inclined, e.g. due to the device moving along an inclined or sloped surface.

### DESCRIPTION OF THE INVENTION

It is an object of embodiments of the invention to provide a method for navigating a movable device in a precise manner, regardless of an inclination of the movable device.

It is a further object of embodiments of the invention to provide a method for navigating a movable device precisely in a cost effective manner.

It is an even further object of embodiments of the invention to provide a movable device being capable of navigating in a precise manner, regardless of an inclination of the movable device.

According to a first aspect the invention provides a method for navigating a movable device, the movable device comprising a moving system arranged to move the movable device along a surface, a control system arranged to control movement of the movable device by means of the moving system, and a vision-based detector, the method comprising the steps of:
- capturing at least one fiducial mounted at or near a position of the movable device, by means of the vision-based detector, and recognising the at least one fiducial,
- determining a position and/or a pose of the movable device, based on the recognised at least one fiducial,
- detecting an inclination of the movable device,
- correcting the determined position and/or pose of the movable device, based on the detected inclination of the movable device, and
- navigating the movable device based on the corrected position and/or pose of the movable device.

Thus, according to the first aspect the present invention relates to a method for navigating a movable device. In the present context the term 'movable device' should be interpreted to mean a device which is capable of moving along a surface, preferably in a self-moving manner, i.e. without a person driving the movable device. The movable device could, thus, be in the form of a robotic vehicle or a similar device.

The movable device comprises a moving system arranged to move the movable device along a surface. The moving system could, e.g., be in the form of a set of wheels, caterpillar belts, or the like, and one or more suitable motors for driving these.

The movable device further comprises a control system arranged to control movement of the movable device by means of the moving system. Accordingly, the control system can ensure that the movable device moves in a desired manner, e.g. following a desired path or moving within defined boundaries. To this end the control system may receive or be in the possession of relevant information enabling it to do so, e.g. including a map of the site, relevant sensor input, information regarding tasks to be performed by the movable device, etc. For instance, the control system may be in the possession of a list of fiducials positioned within a site where the movable device is supposed to move, including the exact positions, e.g. specifying six degrees of freedom, ID, sizes, etc. of the fiducials.

The movable device further comprises a vision-based detector, i.e. a detector which is configured to detect the surroundings of the movable device by means of a vision technique. The vision-based detector could, e.g., be a camera, such as a 2D camera or a 3D camera, and it may be configured to detect electromagnetic waves within the visual spectrum, the infrared spectrum and/or the ultraviolet spectrum.

In the method according to the first aspect of the invention, at least one fiducial mounted at or near a position of the movable device is initially captured, by means of the vision-based detector. Furthermore, the at least one fiducial is recognised. In the present context the term 'fiducial' should be interpreted to mean an object or a marker which is used as a point of reference. Thus, the fiducials are dedicated markers which have been mounted at selected positions within the site where the movable device is supposed to move, e.g. on ceilings and/or walls. The fiducials are visually recognisable, e.g. based on machine readable codes, patterns, colours and/or any other suitable visually detectable characteristics. The fiducials may, e.g., be reflective or luminescent, e.g. fluorescent. This may allow the vision-based detector to capture the fiducials, even when operating in the dark, as long as the vision-based detector is capable of detecting the reflected or emitted wavelengths.

Next, a position and/or a pose of the movable device is determined, based on the recognised at least one fiducial. In the present context the term 'pose' should be interpreted to mean an orientation of the movable device with respect to an axis of rotation being substantially normal to the surface along which the movable device moves. Thus, it is determined where the movable device is and/or how the movable device is oriented.

Since the fiducials are visually recognisable, it is possible, once a given fiducial has been captured, to recognise it, and thereby determine which of a number of possible fiducials has been captured. If the positions of the individual fiducials are known, it is thereby possible to determine the position and/or pose of the movable device, based on a captured fiducial. The fiducials may be individually recognisable. For instance, if the fiducials are unique, the position of the movable device may be determined based on a single captured fiducial. As an alternative, the fiducials may not be unique, but a combination of two neighbouring fiducials may be unique. In this case the position of the movable device may be determined based on two fiducials captured simultaneously.

Furthermore, an inclination of the movable device is detected. This should be interpreted to mean that a tilt of the movable device, i.e. an orientation of the movable device relative to horizontal, is detected. In the case that the movable device is arranged horizontally, the inclination is zero, and if the movable device tilts relative to a horizontal level, the inclination is non-zero. A non-zero inclination could, e.g., be caused by a sloping floor, resulting in a relatively steady inclination, or by foreign object, such as piece of chewing gum, sticking to a wheel of the moving system, resulting in a 'wobbling' inclination as the movable device moves.

It should be noted that the step of detecting an inclination of the movable device may be performed before, during or after the steps of capturing at least one fiducial and determining a position and/or pose of the movable device. This will be described in further detail below.

In the case that a non-zero inclination is detected, the actual direction of orientation of the vision-based detector defines an angle with respect to an expected direction of orientation. Accordingly, if this is not taken into account, the determination of the position of the movable device may be unprecise. Therefore, the determined position and/or pose of the movable device is corrected, based on the detected inclination of the movable device. To this end, the magnitude of the inclination as well as the direction of the inclination is considered. The step of correcting the determined position may be performed as a separate step, or it may be performed as part of detecting an inclination of the movable device. Furthermore, the step of determining a position and/or a pose of the movable device, the step of detecting an inclination of the movable device and the step of correcting the determined position and/or pose may be performed as a single step. In this case, the inclination is essentially taken directly into account when determining the position and/or pose of the movable device.

Finally, the movable device is navigated based on the corrected position and/or pose of the movable device. Thereby it is ensured that the movable device is navigated based on a precise determination of the position and/or pose of the movable device, regardless of whether or not, to which extent and in which direction the movable device may be inclined. Accordingly, precise navigation of the movable device is obtained, regardless of any possibly inclination of the movable device. Furthermore, this is obtained simply by providing the movable device with a low price vision-based detector, the ability to detect an inclination of the movable device, and the ability to calculate a compensation for the detected inclination. Thereby the precise navigation is obtained in a cost effective manner.

The step of capturing at least one fiducial may comprise capturing at least one fiducial mounted on a ceiling at or near a position of the movable device.

The vision based detector may be oriented in a direction which covers part of a ceiling at or near a position of the movable device. For instance, the vision based detector may be oriented in a direction which covers a direction being substantially normal to the surface along which the movable device moves.

According to this embodiment, the vision-based detector is capable of capturing features which are positioned in this normal direction relative to the movable device. For instance, if the movable device moves along a substantially horizontal surface, then the vision-based detector is capable of capturing features arranged directly above the movable device, i.e. along a vertical direction relative to the movable device. It is not ruled out that the detection field of the vision-based detector is broader, e.g. allowing the vision-based detector to capture features arranged along a direction of movement of the movable device, and/or along a direction being substantially normal to the direction of movement as well as to the normal direction, as long as the vision-based detector is capable of capturing features along the normal direction, as described above. Accordingly, in this case the vision-based detector is allowed to capture features arranged along an upwards direction with respect to the movable device, and thereby the vision-based detector is capable of capturing fiducials mounted on the ceiling.

According to this embodiment, in the case that a non-zero inclination is detected, the direction being substantially normal to the surface along which the movable device moves defines an angle with respect to vertical, and the orientation of the vision-based detector therefore defines a corresponding angle with respect to vertical. This may lead to unprecise determination of the position and/or pose of the movable device, and therefore needs to be taken into account, as described above.

The movable device may further comprise an inertial measurement unit, and the step of detecting an inclination of the movable device may be performed by means of the inertial measurement unit. An inertial measurement unit, sometimes referred to as an IMU, is a measurement unit which is capable of detecting an orientation of a device in a three-dimensional space, e.g. by means of accelerometers, gyroscopes and/or magnetometers. Thus, according to this embodiment, the step of detecting an inclination of the movable device is performed by means of a dedicated detector, and as a separate step. However, the step may still be performed before, during or after the steps of capturing at least one fiducial and determining a position and/or a pose of the movable device.

Applying an IMU for determining the inclination of the movable device is an easy and cost effective manner of obtaining this.

As an alternative, the step of detecting an inclination of the movable device may be performed by means of detections obtained by the vision-based detector. According to this embodiment the step of detecting an inclination of the movable device may advantageously be performed as part of the step of capturing at least one fiducial and/or the step of determining a position and/or a pose of the movable device. Furthermore, according to this embodiment, the detection of the inclination of the movable device is performed based on measurements of a detector which is already present for a different purpose, i.e. the vision-based detector. Thereby the inclination of the movable device can be detected without the need for a separate or dedicated sensor.

Detections obtained by the vision-based detector may, e.g., be used for detecting an inclination of the movable device in the following manner. When the vision-based detector captures a known or recognisable feature, e.g. one of the fiducials, with a known shape, the shape of the feature is distorted in the captured image of the feature, due to the inclination of the movable device. The inclination of the movable vehicle can then be determined from the distortion of the feature.

Alternatively or additionally, the inclination of the movable device may be detected in any other suitable manner, e.g. based on other types of sensors, such as wheel encoders, GPS modules or other positioning sensors, such as visual odometry or optical position sensors as used on optical computer mice, such as cameras determining movement of what is in their field of view.

In any event, a pose filter may be applied when detecting the inclination of the movable device in order to ensure that the detected inclination is not affected or biased when the movable device accelerates or decelerates.

The step of capturing at least one fiducial may comprise the vision-based detector capturing a machine readable code forming part of the at least one fiducial. According to this embodiment, the recognition of the at least one fiducial is based on information contained in the machine readable code. The machine readable code could, e.g., be a bar code, a QR code, or any other suitable kind of visually detectable machine readable code.

As an alternative, the fiducials may be recognisable in another manner, e.g. due to patterns colours and/or any other suitable kind of visually detectable feature.

The step of capturing at least one fiducial may comprise capturing at least two fiducials, and the step of determining a position and/or a pose of the movable device may be based on a recognition of a combination of the captured fiducials. According to this embodiment, each fiducial may not be uniquely identifiable. However, as long as the vision-based detector is able to capture at least two neighbouring fiducials simultaneously, and in one image, the combination of these at least two fiducials is unique, and thereby the position and/or the pose of the movable device can be determined therefrom.

As an alternative, each fiducial may be unique, in which case the position and/or the pose of the movable device can be derived from a single recognised fiducial.

The step of detecting an inclination of the movable device may comprise determining an angle of inclination of the movable device, and the step of correcting the determined position and/or pose of the movable device may comprise compensating the determined position and/or or pose in accordance with the determined angle of inclination.

According to this embodiment, it is not only determined that the movable device is inclining, it is also determined how much it is inclining, in terms of the angle of inclination. In the case that the inclination of the movable device is caused by the movable device moving along a slope, the angle of inclination is defined by a sloping angle relative to horizontal. Accordingly, the determined position and/or pose of the movable device needs to be corrected in accordance with this angle in order to obtain a correct position and/or pose. It should be noted that the inclination may be in the direction of movement of the movable device and/or in a direction transverse to the direction of movement of the movable device, e.g. substantially perpendicular thereto.

The method may further comprise the step of obtaining an image of one or more features arranged at or near the position of the movable device, by means of the vision-based detector, and the step of determining a position and/or a pose of the movable device may further be based on the obtained image.

According to this embodiment, in addition to capturing the fiducials, the vision-based detector also captures other visually detectable and recognisable features at the site where the movable device operates. If the position of such features within the site is known, they may assist the movable device in determining its position and/or the pose. The features could, e.g., be landmarks or other permanent devices of the site, and/or various objects at the location.

The step of capturing at least one fiducial may comprise the step of capturing at least one fiducial mounted on a wall at or near a position of the movable device.

According to this embodiment, the vision-based detector is capable of capturing fiducials which are mounted on one or more walls, e.g. in addition to or alternatively to fiducials mounted on the ceiling. Furthermore, the wall mounted fiducials are also taken into account when the position and/or pose of the movable device is determined. For instance, the wall mounted fiducials may be unique, in which case the global position of the movable device can be determined based on one or more captured and recognised wall mounted fiducials, while the pose of the movable device may be determined based on one or more captured and recognised ceiling mounted fiducials. As an alternative, the position and/or pose of the movable device may be determined from a combination of at least one ceiling mounted fiducial and at least one wall mounted fiducial being captured and recognised by the vision-based detector.

According to a second aspect the invention provides a movable device comprising a moving system arranged to move the movable device along a surface, a control system arranged to control movement of the movable device by means of the moving system, and a vision-based detector, wherein the control system is adapted to navigate the movable device in accordance with a method according to the first aspect of the invention. Thus, the remarks set forth above are equally applicable here.

The movable device may further comprise an inertial measurement unit configured to detect an inclination of the movable device. This has already been described above.

The vision-based detector may be a camera, such as a 2D camera or a 3D camera. The camera may be configured to capture electromagnetic radiation within the visual spectrum, the infrared spectrum and/or the ultraviolet spectrum, depending on the nature of the fiducials which the vision-based detector is supposed to capture.

At least the vision-based detector may be arranged in a nugget mounted on the movable device. According to this embodiment, the vision-based detector, and possibly a processer and/or a communication unit is arranged in a separate part or module in the form of a nugget. The nugget may, e.g., be retrofitted onto the movable device. This is a cost effective manner of providing a low cost movable device with the capability of navigating precisely, even on sloped surfaces.

### BRIEF DESCRIPTION OF THE DRAWINGS

The invention will now be described in further detail with reference to the accompanying drawings in which
Fig. 1 is a schematic illustration of a movable device according to a first embodiment of the invention,
Fig. 2 is a schematic illustration of a movable device according to a second embodiment of the invention,
Fig. 3 shows fiducials for use in a method according to an embodiment of the invention,
Fig. 4 shows the movable device of Fig. 1 capturing a number of fiducials,
Fig. 5 shows the movable device of Fig. 1 on a horizontal surface and on a sloped surface,
Figs. 6 and 7 illustrate the movable device of Fig. 1 capturing a fiducial from a horizontal surface and a sloped surface, respectively, and
Fig. 8 is a flow chart illustrating a method according to an embodiment of the invention.

### DETAILED DESCRIPTION OF THE DRAWINGS

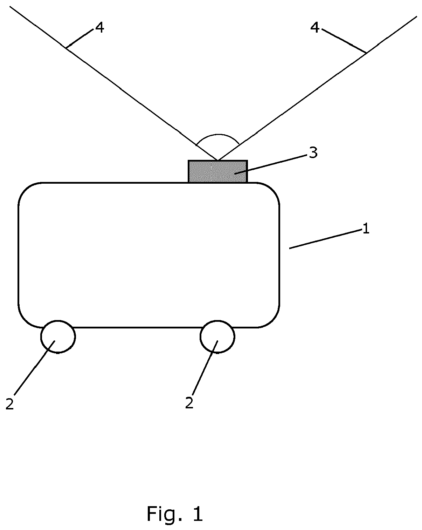

Fig. 1 is a schematic illustration of a movable device 1 according to a first embodiment of the invention. The movable device 1 comprises a moving system in the form of wheels 2, and the movements of the movable device 1 are controlled by means of a control system (not shown). The movable device 1 further comprises a vision-based detector 3 mounted on an upper part of the movable device 1. The vision-based detector 3 may, e.g., be in the form of a camera.

The vision-based detector 3 defines a detection field, illustrated by lines 4, spanning an angle. The detection field covers a direction pointing directly vertically upwards, i.e. normal to a horizontal surface along which the movable device 1 moves. Thereby the vision-based detector 3 is capable of capturing features arranged above the movable device 1, e.g. features mounted on or forming part of a ceiling. The vision-based detector 3 can be used for determining a position and/or a pose of the movable device 1, in a manner which will be described in further detail below.

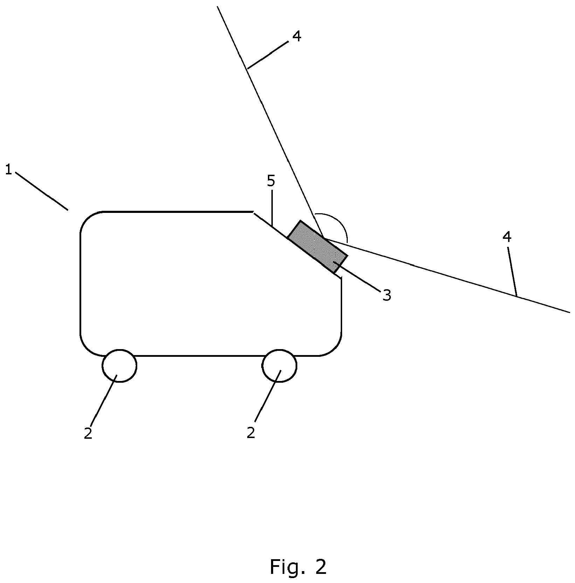

Fig. 2 is a schematic illustration of a movable device 1 according to a second embodiment of the invention. The movable device 1 of Fig. 2 is very similar to the movable device of Fig. 1, and it will therefore not be described in detail here. However, in the movable device 1 of Fig. 2, the vision-based detector 3 is mounted on an inclined surface 5 of the movable device 1. Thereby the detection field 4 of the vision-based detector 3 is directed more in a forwards direction than is the case for the movable device 1 of Fig. 1. This allows the vision-based detector 3 to also capture features arranged in front of the movable device 1 along a direction of movement. Thereby the vision-based detector 3 can be used for further navigation tasks, such as proximity determination. However, the detection field 4 still covers the direction being substantially normal to the horizontal surface along which the movable device 1 moves.

It should be noted that even though Fig. 2 shows that the vision-based detector 3 is directed in such a manner that it is allowed to capture features arranged in front of the movable device 1, it is within the scope of protection of the present invention that the inclined surface 5 could be arranged on the movable device 1 in a manner which allows the vision-based detector 3 to captures features behind the movable device 1, i.e. in a direction opposite to the direction of movement of the movable device 1, and/or sideways relative to the movable device 1, i.e. in a direction which is transverse to the direction of movement of the movable device 1. It is also within the scope of protection of the present invention that the vision-based detector 3 is mounted on the movable device 1 in a manner which does not allow the vision-based detector 3 to capture features arranged directly above the movable device 1.

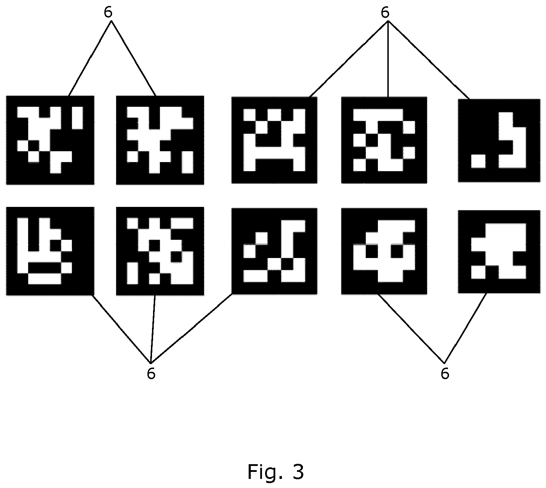

Fig. 3 shows fiducials 6 for use in a method according to an embodiment of the invention. The fiducials 6 are in the form of two-dimensional machine readable codes, allowing them to be recognised when captured by a suitable vision-based detector, such as a camera. In Fig. 3 ten fiducials 6 are shown, each being different from any of the other fiducials 6. Thereby the fiducials 6 of Fig. 3 can all be uniquely identified. Accordingly, if the fiducials 6 of Fig. 3 are mounted at specific positions within a site where a movable device is supposed to move, the movable device will be able to determine its position and/or pose by capturing and recognising a given fiducial.

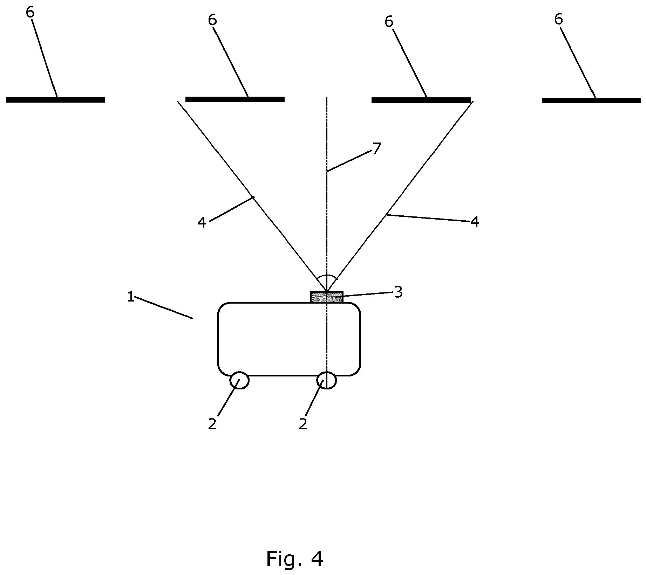

Fig. 4 shows the movable device 1 of Fig. 1 and four fiducials 6 mounted on a ceiling above the movable device 1. The fiducials 6 could, e.g., be of the kind illustrated in Fig. 3. It can be seen that the detection field 4 of the vision-based detector 3 covers a direction, illustrated by dashed line 7, which is normal to a horizontal surface, along which the movable device 1 moves. Accordingly, the vision-based detector 3 is capable of capturing the fiducials 6 mounted on the ceiling above the movable device 1 as the movable device 1 moves along the horizontal surface.

It can be seen that, in the position of the movable device 1 illustrated in Fig. 4, the vision-based detector 3 captures two neighbouring fiducials 6. The fiducials 6 are recognisable, and thereby the movable device 1 is capable of determining its position, and possibly its pose, based on the recognition of the captured fiducials 6. To this end it is assumed that the movable device 1 is not inclining, that the vision-based detector 6 is thereby arranged substantially horizontally, and the line 7 is therefore arranged substantially vertically. However, if the movable device 1 is, for some reason, inclined, e.g. due to the movable device 1 moving along a sloped surface, or due to an object being stuck on one of the wheels 2, this assumption is not true, and therefore the position of the movable device 1 is determined incorrectly. Accordingly, when this is the case it is necessary to correct the determined position in order to take the inclination of the movable device 1 into account.

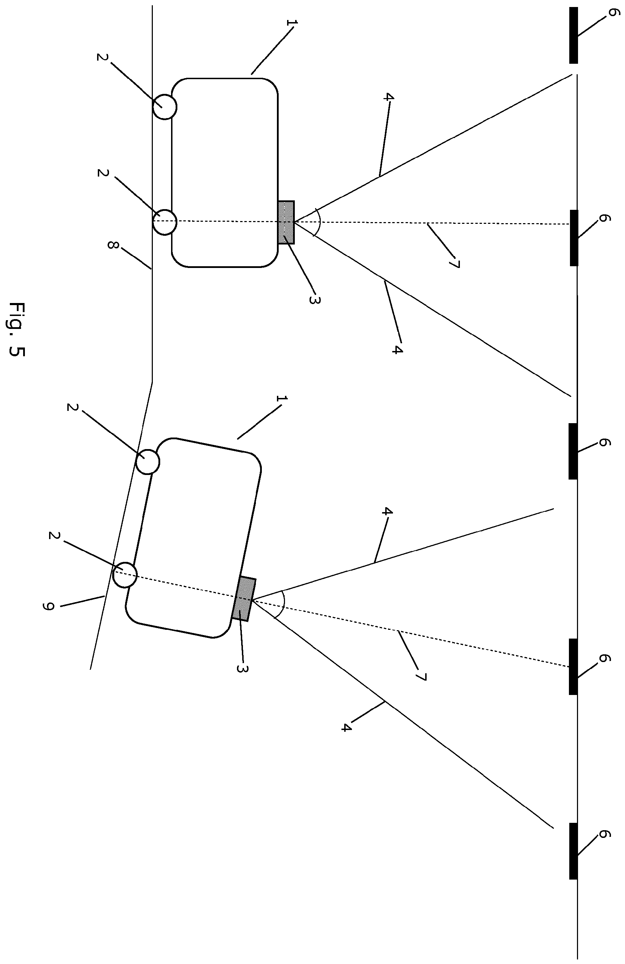

Fig. 5 shows the movable device 1 of Fig. 1 moving along a horizontal surface 8, as described above with reference to Fig. 4, and along an inclined surface 9, respectively. It can be seen that when the movable device 1 moves along the inclined surface 9, the detection field 4 of the vision-based detector 3 is tilted as compared to the situation where the movable device 1 moves along the horizontal surface 8. This is illustrated by the line 7, which indicates the direction which is normal to the surface 9 along which the movable device 1 moves, defining an angle with respect to vertical.

If the inclination of the movable device 1 is not taken into account when determining the position and/or pose of the movable device 1, based on at least one recognised fiducial 6, the determination of the position will be incorrect. More particularly, in the example illustrated in Fig. 5, the uncorrected determined position of the movable device 1 would be further to the right than the actual position of the movable device 1. The larger the inclination, the larger the deviation between the determined position and the actual position of the movable device 1.

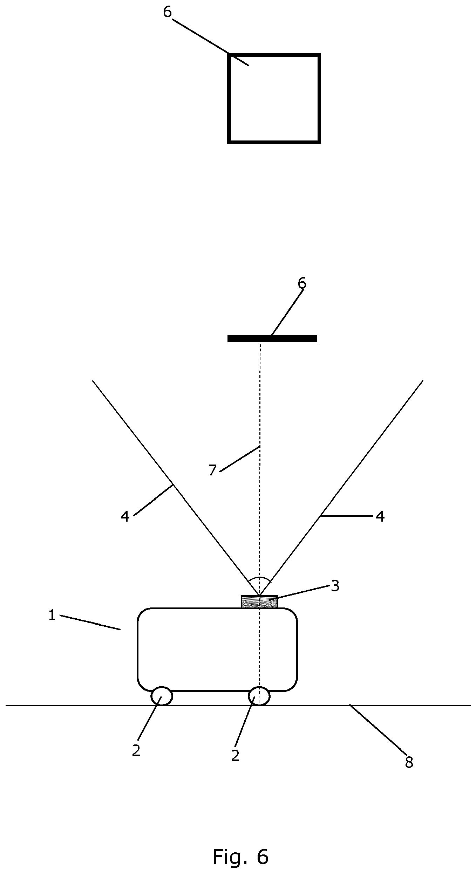

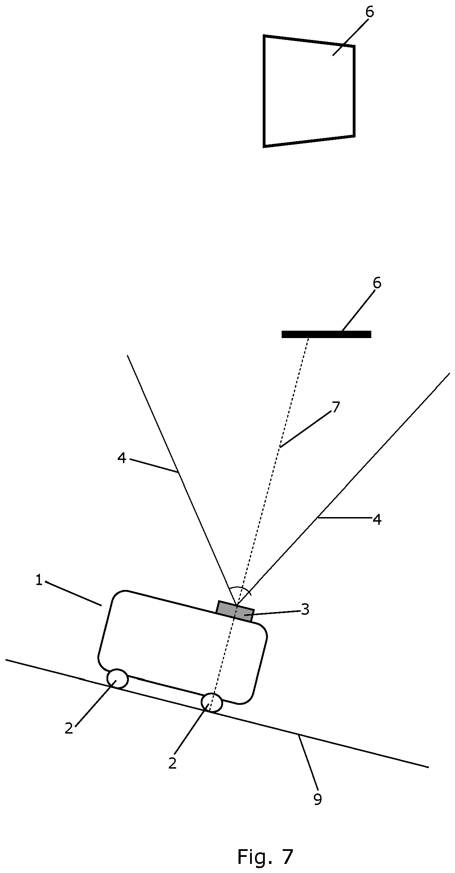

In order to improve the accuracy of the determination of the position and/or the pose of the movable device 1, the inclination of the movable device 1 is detected. This could, e.g., be done by means of an inertial measurement unit (IMU) arranged in or mounted on the movable device 1. As an alternative, the inclination may, e.g., be detected by means of the vision-based detector 3, e.g. in the manner described below with reference to Figs. 6 and 7. In any event, an angle of inclination is preferably determined.

Next, the determined position and/or pose of the movable device 1 is corrected, based on the detected inclination. In the example illustrated in Fig. 5, the determined position should be moved towards the left by a distance, Δx=D·sin(α), where D is the distance between the vision-based detector 3 and the ceiling, along the line 7, and α is the angle of inclination.

When the determined position of the movable device 1 is corrected in this manner, a more accurate position determination is obtained, and thereby it is possible to navigate the movable device 1 in a more precise manner. Since the correction is based on a detection of the inclination of the movable device 1, the accurate position determination can be obtained easily, and regardless of the direction or magnitude of the inclination of the movable device 1.

Figs. 6 and 7 illustrate detection of an inclination of the movable device 1 of Fig. 1 by means of the vision-based detector 3. In Fig. 6, the movable device 1 moves along a horizontal surface 8 and captures a fiducial 6 mounted immediately above the vision-based detector 3. Since the direction 7 being normal to the surface 8 along which the movable device 1 moves is substantially vertical, the vision-based detector 3 captures an undistorted image of the fiducial 6, as illustrated in the upper part of Fig. 6.

In Fig. 7, the movable device 1 moves along an inclined surface 9, and therefore the direction 7 being normal to the surface 9 along which the movable device 1 moves forms an angle with respect to vertical. Therefore the vision-based detector 3 captures a distorted image of the fiducial 6, caused by the inclination, as illustrated in the upper part of Fig. 7. The angle of inclination can be derived from an analysis of the distortion of the captured image. Accordingly, the inclination of the movable device 1 can be detected by means of the vision-based detector 3.

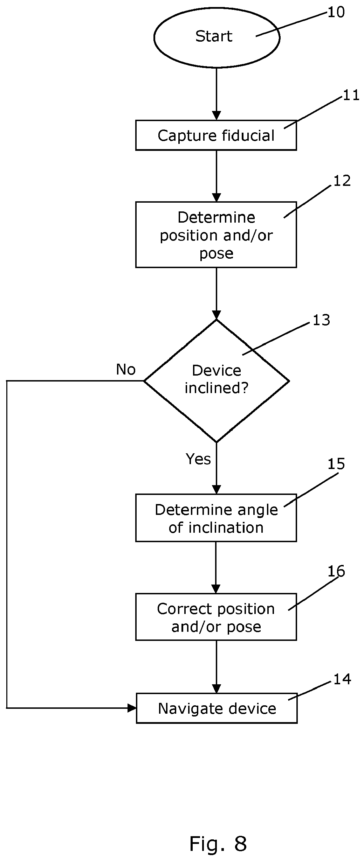

Fig. 8 is a flow chart illustrating a method according to an embodiment of the invention. The process is started at step 10. At step 11 at least one fiducial is captured by means of a vision-based detector mounted on or forming part of a movable device, and the fiducial(s) is/are recognised.

At step 12 a position and/or a pose of the movable device is determined, based on the recognised fiducial(s).

At step 13 it is investigated whether or not the movable device is inclined. If this is not the case, it can be concluded that the determined position and/or pose is correct and reliable, and therefore the process is forwarded to step 14, where the movable device is navigated based on the determined position and/or pose.

In the case that step 13 reveals that the movable device is inclined, the process is forwarded to step 15, where an angle of inclination of the movable device is determined. At step 16, the position and/or pose of the movable device, which was determined at step 12, is corrected on the basis of the determined angle of inclination. Thereby the inclination of the movable device is taken into account in the determination of the position and/or pose of the movable device, and accordingly a more precise determination of the position and/or pose is obtained.

Finally, the process is forwarded to step 14, where the movable device is navigated based on the corrected determination of the position and/or pose of the movable device.

## Claims

1. A method for navigating a movable device, the movable device comprising a moving system arranged to move the movable device along a surface, a control system arranged to control movement of the movable device by means of the moving system, and a vision-based detector, the method comprising the steps of:
- capturing at least one fiducial mounted at or near a position of the movable device, by means of the vision-based detector, and recognising the at least one fiducial,
- determining a position and/or a pose of the movable device, based on the recognised at least one fiducial,
- detecting an inclination of the movable device,
- correcting the determined position and/or pose of the movable device, based on the detected inclination of the movable device, and
- navigating the movable device based on the corrected position and/or pose of the movable device.

2. A method according to claim 1, wherein the step of capturing at least one fiducial comprises capturing at least one fiducial mounted on a ceiling at or near a position of the movable device.

3. A method according to claim 1 or 2, wherein the vision based detector is oriented in a direction which covers part of a ceiling at or near a position of the movable device.

4. A method according to claim 3, wherein the vision based detector is oriented in a direction which covers a direction being substantially normal to the surface along which the movable device moves.

5. A method according to any of the preceding claims, wherein the movable device further comprises an inertial measurement unit, and wherein the step of detecting an inclination of the movable device is performed by means of the inertial measurement unit.

6. A method according to any of claims 1-4, wherein the step of detecting an inclination of the movable device is performed by means of detections obtained by the vision-based detector.

7. A method according to any of the preceding claims, wherein the step of capturing at least one fiducial comprises the vision-based detector capturing a machine readable code forming part of the at least one fiducial.

8. A method according to any of the preceding claims, wherein the step of capturing at least one fiducial comprises capturing at least two fiducials, and wherein the step of determining a position and/or a pose of the movable device is based on a recognition of a combination of the captured fiducials.

9. A method according to any of the preceding claims, wherein the step of detecting an inclination of the movable device comprises determining an angle of inclination of the movable device, and wherein the step of correcting the determined position and/or pose of the movable device comprises compensating the determined position and/or or pose in accordance with the determined angle of inclination.

10. A method according to any of the preceding claims, further comprising the step of obtaining an image of one or more features arranged at or near the position of the movable device, by means of the vision-based detector, and wherein the step of determining a position and/or a pose of the movable device is further based on the obtained image.

11. A method according to any of the preceding claims, wherein the step of capturing at least one fiducial comprises capturing at least one fiducial mounted on a wall at or near a position of the movable device.

12. A movable device comprising a moving system arranged to move the movable device along a surface, a control system arranged to control movement of the movable device by means of the moving system, and a vision-based detector, wherein the control system is adapted to navigate the movable device in accordance with a method according to any of the preceding claims.

13. A movable device according to claim 12, further comprising an inertial measurement unit configured to detect an inclination of the movable device.

14. A movable device according to claim 11 or 12, wherein the vision-based detector is a camera.

15. A movable device according to any of claims 12-14, wherein at least the vision-based detector is arranged in a nugget mounted on the movable device.
